# EUROPEAN PATENT SPECIFICATION

(11) **EP 0 342 291 B1**
(45) Date of publication and mention of the grant of the patent: **03.08.1994**
(21) Application number: 88311007.4
(22) Date of filing: 21.11.1988
(51) Int. Cl.: G02B 27/10, G02F 1/11

(54) **An optical beam splitting method and an optical beam splitting/modulation method**
Verfahren zur optischen Strahlenteilung und Modulation
Procédé pour séparer et moduler des faisceaux optiques

(30) Priority: 17.05.1988 JP 120169/87
(43) Date of publication of application: 23.11.1989
(73) Proprietor: THINK LABORATORY CO., LTD., Kashiwa-shi Chiba-ken 277 (JP)
(72) Inventor: Taniura, Hiroshi, Tuchiura-shi Ibaragi-Ken (JP)
(74) Representative: Thomson, Paul Anthony

(56) References cited:
- EP-A- 0 211 596
- EP-A- 0 299 455
- DE-A- 2 729 212
- GB-A- 2 178 548
- PATENT ABSTRACTS OF JAPAN, vol. 7, no. 212 (P-224)(1357), 20 September 1983 ; & JP-A-58106517

## Description

### BACKGROUND OF THE INVENTION

### 1. Field of the Invention

The present inventions relates to an optical beam splitting method and an optical beam splitting/modulation method which are necessary in cases where, for example, halftone plate duplicate images are recorded on a recording material by controlling a light-exposure means on its recording side in accordance with image signals obtained by photoelectric manipulation of an original image, and especially in cases where halftone plate images are recorded by independently modulating a multiple number of beams on the basis of image signals.

### 2. Prior Art

Recording of halftone plate images by the relative scanning of a multiple number of light beams (lined up in a row) across the surface of a recording material, with the light beams independently modulated on the basis of image signals, is conventionally known in the art. In most cases, the multiple number of light beams are obtained by installing a multiple number of totally reflective mirrors and semi-reflective mirrors, and splitting a single light beam generated by an argon laser by reflecting the light beam from the mirrors. The respective light beams thus obtained are independently modulated by means of a multi-channel ultrasonic modulator and are then reduced in diameter by means of a crystal optical system and directed onto the surface of the recording material.

If, in a case where some crosstalk is permissible in modulation in an ultrasonic modulator, the beam diameter of the Gauss beams is, for example, 1.2 mm, then the spacing of the acoustic electrodes and the spacing of the beams is set at 1.1 mm, the acoustic electrodes have a diameter of 1.2 mm and are installed in two zig-zag rows on the side surface of the modulator. Furthermore, immediately after passing through the ultrasonic modulator, the beams are reduced in diameter by means of a crystal optical system and are directed onto the surface of a recording material.

However, in order to prevent the modulation of one light beam from causing crosstalk with adjacent light beams on both sides, it is necessary to separate the beam diameters of the Gauss beams passing through the ultrasonic modulator (i. e., the beam diameters which represent an intensity distribution effective in exposing the recording material) so that there is no overlapping. For example, if the beam diameter of the Gauss beams is 1.2 mm, the acoustic electrodes are constructed with a diameter of 1.5 mm, and the spacing of the acoustic electrodes and the spacing of the beams is set at 2.0 mm. In the case of a multiple number of optical beams which are lined up in a row with widened spacing in this manner, the spacing is narrowed using optical fibers, etc., so that adjacent light beams overlap slightly with each other, and the beams are reduced in diameter by means of a crystal optical system before being directed onto the surface of a recording material.

In such a case, the light beams which are independently modulated on a beam by beam basis by the ultrasonic modulator cannot be immediately reduced in diameter by the crystal optical system and caused to expose the recording material. It is necessary first to narrow the beam spacing using optical fibers or mirrors, etc., so that the circles of the Gauss diameters of the adjacent light beams overlap slightly, forming a connected chain. Afterward, the beam diameters are reduced by a crystal optical system, and the beams are directed onto the surface of the aforementioned recording material. The reason for this is that if a multiple number of light beams lined up in a row are separated from each other instead of being overlapped in the form of a connected chain, the row of dots formed on the surface of the recording material will be a row of unconnected dots. In such a case, halftone images of various sizes cannot be formed on the surface of the recording material even if the multiple number of light beams are independently modulated on the basis of image signals.

Conversely, if the overlapping between adjacent light beams is excessive, then, as was described above, crosstalk is generated in the independent modulation of the respective light beams by the multi-channel ultrasonic modulator. Specifically, the acoustic electrodes will not only drive their corresponding light beams, but will also drive the light beams located on both sides of their corresponding light beams.

However, in cases where an optical beam splitter of the type described in Japanese Patent Application Laid-Open (Kokai) No. 52-122135 is used, the generation of a certain amount of crosstalk in the modulation occurring in the ultrasonic modulator must be tolerated. If it is desired to allow no crosstalk, it is necessary to install optical fibers, etc., after the ultrasonic modulator, and to use these to cause slight overlapping of the light beams with narrowed spacing, after which the beams are reduced in diameter by a crystal optical system and directed onto the surface of a recording material. As a result, a larger amount of space is required.

On the other hand, in cases where an optical beam splitter of the type described in Japanese Patent Application Laid-Open (Kokai) No. 58-10713 is used, a multiple number of light beams lined up in a row, which have been split into spaced light beams by the beam splitter, can be immediately reduced in diameter by means of a crystal optical system and caused to expose a recording material after being independently modulated on a beam by beam basis by a multi-channel ultrasonic modulator. Accordingly, this system is superior to that described in Japanese Patent Application Laid-Open (Kokai) No. 52-122135. The reason for this is that the beam spacing is gradually narrowed as the multiple number of light beams leave the optical beam splitter as described above. However, some problems remain when the light beams are independently modulated on a beam by beam basis by means of a multi-channel ultrasonic modulator. Specifically, since the light beams are not parallel to each other, the modulating efficiency of the modulator drops. Furthermore, light leakage may occur in some cases, and formation of the acoustic electrodes of the modulator is also difficult. In addition, maintaining the thickness and angle of intersection of the two surfaces of the optical beam splitter at prescribed values with an ultra-high degree of precision is difficult, and the manufacture of the optical beam splitter is very difficult. If the thickness or angle of intersection of the two surfaces of the optical beam splitter shows even a slight variation, the focal distances of the respective light beams will show a large variation, and the spacing between the optical beam splitter and the modulator, as well as the spacing between the modulator and the crystal optical system modulator will be unavoidably different in each individual apparatus.

Furthermore, in both the optical beam splitters described in Japanese Patent Application Laid-Open (Kokai) Nos. 52-122135 and 58-10713, the practical limit on the number of light beams into which one light beam can be split is around 20. Accordingly, it is impossible to improve the image resolution by increasing the number of split beams beyond this number. If the number of split light beams is increased beyond about 20, heat accumulates in the interior of the modulator crystal so that there are problems in terms of insufficient heat resistance and durability. Furthermore, in the case of the optical beam splitter described in Japanese Patent Application Laid-Open (Kokai) No. 52-122135, an increase in the number of split beams makes it necessary to increase the size of the crystal optical system.

In DE-A-2729212 there is disclosed a method for splitting a light beam by directing such beam into an optical beam splitter comprising four transparent parallel plates having the same thickness, the back surface of each of said plates being coated with a reflective film, the reflectivity of said films gradually increasing, the respective coating regions being positioned in an oblique arrangement whereby said light being reflected by said films is such that the incident beam is split into four split beams of equal intensity and such that the split beams are emitted parallel in a row without striking the preceding films.

In EP-A-0 299 455 (prior art within the meaning of Article 54(3)EPC) there is disclosed a method for splitting/modulating light beams in a similar manner to the present invention as can be seen from Figs. 6, 7 and 13 to 26 in combination with the corresponding description.

The object of the present inventions is to provide an optical beam splitting method and an optical beam splitting/modulation method in which a multiple number of light beams which are incident parallel to each other in rows can each be split into two light beams, in which the respective light beams can be independently modulated without the occurrence of any crosstalk in multi-channel ultrasonic modulators, in which there is no need to make the multi-channel ultrasonic modulators and crystal optical system installed in positions following the optical beam splitter any larger than in conventional systems of this type, in which there is no need to install mirrors or optical fibers between the multi-channel ultrasonic modulators and the crystal optical system, and in which the apparatus is compact, simple and easy to assemble and adjust.

According to the present invention there is provided an optical beam splitting method, in which:
a light beam is caused to pass through a first optical beam splitter in which (a) a prescribed number n of transparent parallel plates having the same thickness to a high degree of precision are stacked together, (b) the back surface of the transparent parallel plate which is the farthest from the side at which said light beam enters is coated with a totally reflective film while the back surfaces of all of the remaining transparent parallel plates are coated with different semi-reflective films whose respective reflectivities gradually increase from the front of the stack toward the back in a numerical series 1/n, 1/(n-1), 1/(n-2), 1/(n-3), ... 1/4, 1/3, 1/2 in relation to the number n of said transparent parallel plates, and (c) coating regions of said totally reflective film and semi-reflective films are positioned in a stepwise oblique arrangement which is struck by said light beam travelling obliquely through the interiors of said transparent parallel plates;
said light beam is partially reflected by each of said semi-reflective films and completely reflected by said totally reflective film, so that said light beam is converted into a number n of split light beams which are of equal luminous intensity, and so that the respective split light beams are emitted parallel to each other in a row in the direction of the side of the stack from which said light beam initially entered, without any of said split light beams striking the preceding semi-reflective films;
characterised in that:
said split light beams are next caused to be incident on a second optical beam splitter in which (a) one surface of a light-transmitting material is partially coated in band form with a totally reflective film, while another parallel surface of said light-transmitting material is partially coated in band form with a semi-reflective film which has a reflectivity of 50%, and (b) said surface which is coated with said totally reflective film is inclined by a prescribed amount with respect to the plane perpendicular to the incident split light beams split by the first optical beam splitter and with respect to the direction in which the incident split light beams are lined up in a row;
and in that a first series of split light beams with approximately 50% of the intensity of the incident split light beams are split and emitted parallel to each other in a row from said semi-reflective film and a second series of split light beams with the remaining 50% of the intensity of the incident light beams are internally reflected by said semi-reflective film and completely reflected by said totally reflective film, and are therefore again emitted parallel to each other in a row from the surface coated with said semi-reflective film, but are emitted so that they miss said semi-reflective film, and are furthermore emitted so that said second series of split light beams are separated by a prescribed distance from said first series of split light beams, and so that the individual split light beams in the first series are laterally shifted by approximately one-half pitch with respect to the individual split light beams in the second series.

Also according to the present invention there is provided a method of modulating light beams comprising the step of splitting a single light beam into a first and a second series of n light beams as referred to above, and further comprising the installation of two multi-channel ultrasonic modulators equipped with acoustic electrodes which are positioned perpendicular to the respective split light beams and which independently modulate said split light beams, said two ultrasonic modulators being installed adjacent to each other with said acoustic electrodes on the outside, said first series of split light beams with 50% intensity emitted from said semi-reflective film with a reflectivity of 50% being passed through one of said ultrasonic modulators, said second series of split light beams with 50% intensity emitted from said uncoated area being passed through the other multi-channel ultrasonic modulator, the split light beams in each of the series being individually and independently modulated on the basis of image signals, and the split light beams in one series being modulated with a delay applied with respect to the modulation of the other of said two series so that the two rows of modulated light beams are convertible into a single row which takes the form of a connected chain.

### BRIEF DESCRIPTION OF THE DRAWINGS

Figure 1 is a plain view of a direct exposure apparatus for a gravure palte making roll;
Figure 2 is a bottom view of a multi-coating plate which is used to manufacture the optical beam splitter which performs the first stage of beam splitting;
Figure 3 is a view seen from the direction of arrow III in Figure 1;

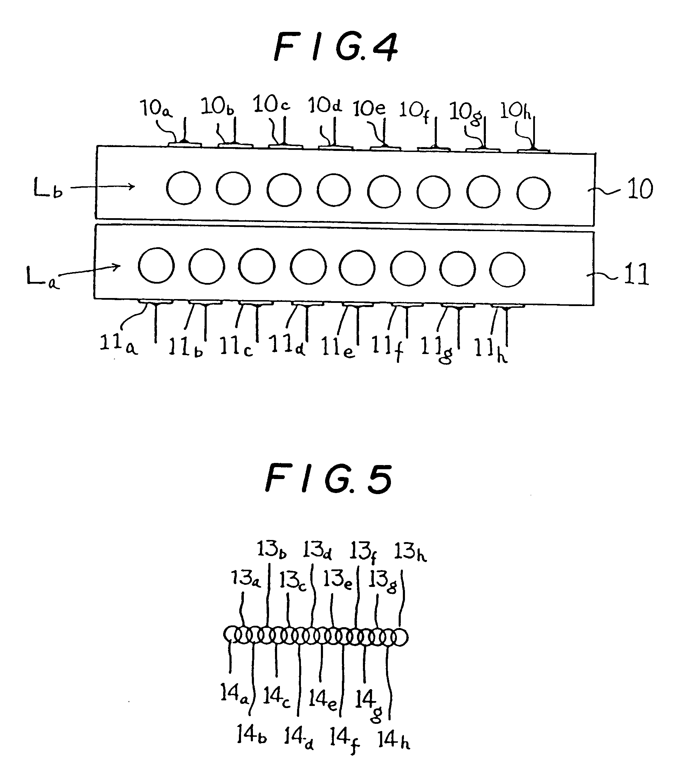

Figure 4 is a view seen from the direction of arrows IV-IV in Figure 1; and
Figure 5 is a diagram which illustrates an arrangement of the light beam dots on the recording surface, indicating how sixteen light beams in two rows are directed so that the surface of the recording material is exposed in a single row of dots.

### DETAILED DESCRIPTION OF THE INVENTION

The basic structure of the present invention is common to both the first and second embodiments thereof. A direct exposure apparatus is described in which (a) an argon laser beam is split into a row of eight light beams, which are then further split to produce two rows containing a total of sixteen light beams, (b) these light beams are independently modulated on the basis of halftone image signals, (c) signals are sent with a delay corresponding to a phase shift applied to one row of light beams, (d) the light beams are reduced in diameter by a crystal optical system, (e) a rotating gravure platemaking roll coated with a photosensitive film is exposed using these light beams, and (f) a scanning movement is performed in the direction of the length of the surface of the platemaking roll.

In the Figures, reference numeral 1 indicates a platemaking roll. This roll 1 is chucked at both ends by a pair of rotating chucks, and is caused to revolve at a high speed. Reference numeral 2 denotes an X table, which is free to move along the length of the platemaking roll 1 in accordance with the rotation of the platemaking roll 1. A Y table 3 is installed on the X table and can be moved toward or away from the platemaking roll 1 by a control motor 4.

In this apparatus, a light beam (laser beam) from a fixed argon laser (not shown in the Figures) is bent by a totally reflective mirror 5 installed on the X table 2 and totally reflective mirror 6 installed on the Y table 3 and is thus conducted into a first optical beam splitter 8 which is installed on the Y table 3. This light beam is split into eight light beams which are lined up parallel to each other in a horizontal plane by the first optical beam splitter 8. These light beams are then split into sixteen light beams in two rows (eight light beams per row), which are shifted by one-half pitch with respect to each other by a second optical beam splitter 9 which is installed on the Y table 3.

Next, these light beams are independently modulated and controlled on the basis of halftone image signals by two eight-channel ultrasonic modulators 10 and 11 which are stacked one on top of the other. The light beams are then reduced to a small beam diameter by a crystal optical system 12 and are focused on the platemaking roll 1 coated with a photosensitive film by an auto-focus lens 12a, so that the photosensitive film is scanned and exposed in accordance with the movement of the X table 2.

The optical beam splitting method of this invention specifies that (a) a single light beam is split into a multiple number of light beams in a row using the first optical beam splitter 8, (b) each of the split beams is then further split into two light beams using the second optical beam splitter 9, and (c) the light beams are split into two rows which are shifted by one-half pitch with respect to each other.

The optical beam splitting/modulation method of this invention specifies that, in addition to the abovementioned optical beam splitting method, (a) the two rows of split beams are separately conducted into the multi-channel ultrasonic modulators 10 and 11, (b) the respective light beams are independently modulated and controlled, (c) one row of the light beams is modulated with a delay, and then (d) the light beams are modulated so that they form a single row in the form of a connected chain on the object of recording.

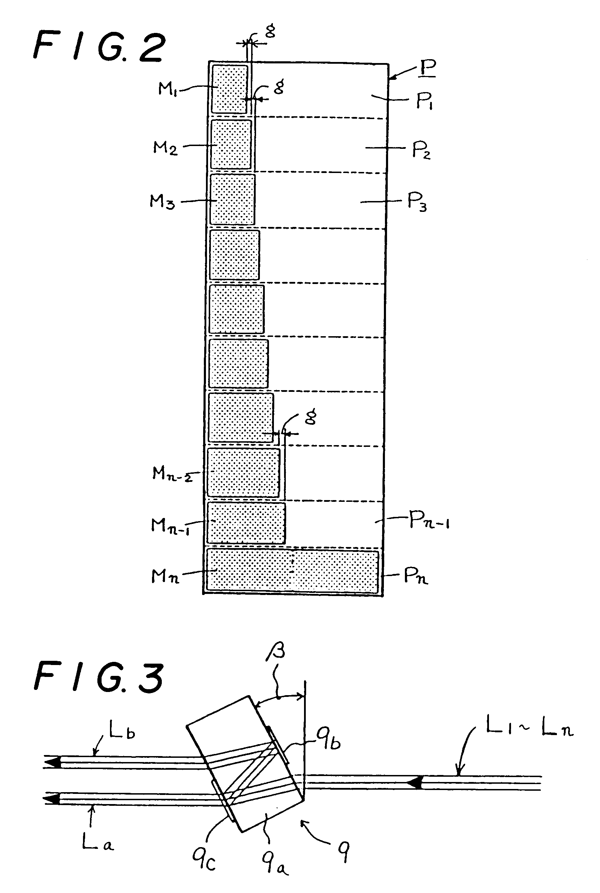

In the first optical beam splitter 8, as seen in Figure 2, a prescribed number n of transparent parallel plates P1, P2, P3, ... Pn-1, Pn having the same thickness to a high degree of precision are stacked together. The back surface of the transparent parallel plate Pn which is the farthest from the side to which the light beam enters is coated with a totally reflective film Mn, while the back surfaces of all of the remaining transparent parallel plates P1, P2, P3, ... Pn-1 are coated with different semi-reflective films M1, M2, M3, ... Mn-2, Mn-1. The respective reflectivities of these films gradually increase from the front (M1) of the stack toward the back (Mn-1) in a numerical series 1/n, 1/(n-1), 1/(n-2), 1/(n-3), ... 1/4, 1/3, 1/2 in relation to the number n of the transparent parallel plates. The coating regions of the totally reflective film Mn and semi-reflective films M1, M2, M3, ... Mn-1 are positioned in a stepwise oblique arrangement which is struck by the light bean LO traveling obliquely through the interiors of the transparent parallel plates P1 through Pn.

Furthermore, the first optical beam splitter 8 is designed so that the light beam LO is converted into a number n of split light beams L1, L2, L3, ... Ln-1, Ln which are of equal luminous intensity (the number n of the split light beams is equal to the number n of the transparent parallel plates) by partial reflection by the respective semi-reflective films M1, M2, M3, ... Mn-1 and total reflection by the totally reflective film Mn, and so that the respective split light beams are emitted parallel to each other in a row in the direction of the side of the stack from which the light beam LO initially entered, without any of said split light beams striking the preceding semi-reflective films.

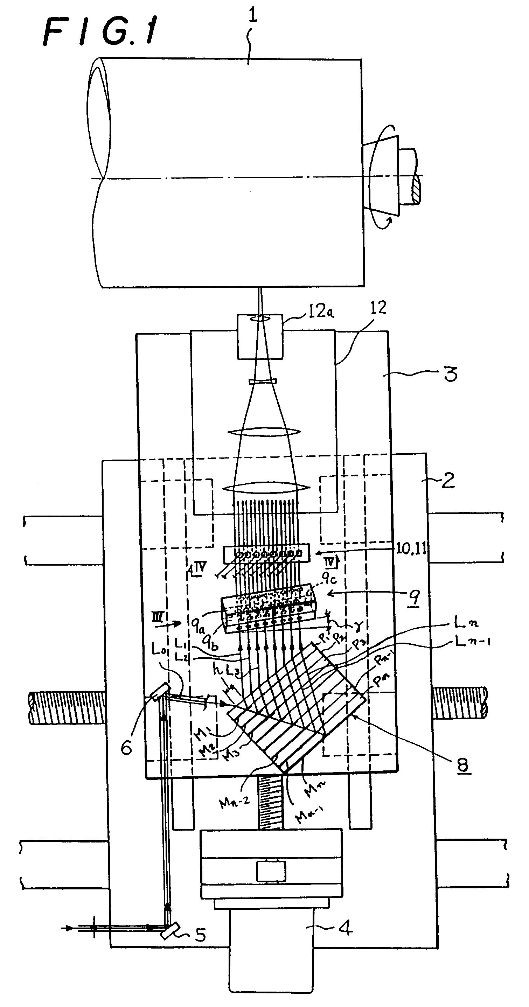

The first optical beam splitter 8 has n transparent parallel plates P1, P2, P3, ... Pn-1, Pn. As shown in Figure 2, these plates are formed by splitting a single transparent parallel substrate P into n number of plates, which are then stacked together. Accordingly, the thicknesses of the plates are the same to a high degree of precision. Furthermore, before the substrate is split into n plates, it is coated with the semi-reflective films M1, M2, M3, ... Mn-2, Mn-1 and the totally reflective film Mn. In the example illustrated in the Figures, the number of semi-reflective films M1 through Mn-1 is nine. The semi-reflective film M1 has a reflectivity of 1/8 (i. e., a transmissivity of 7/8), the semi-reflective film M2 has a reflectivity of 1/7 (i. e., a transmissivity of 6/7), the semi-reflective film M3 has a reflectivity of 1/6 (i. e., a transmissivity of 5/6), and so on, so that the semi-reflective film Mn-2 has a reflectivity of 1/3 (i. e., a transmissivity of 2/3), and the semi-reflective film Mn-1 has a reflectivity of 1/2 (i. e., a transmissivity of 1/2). Accordingly, each of the n split light beams L1, L2, L3. Ln-1, Ln shown in Figure 1 has a quantity of light equal to 1 of n (1/n) equal parts of the light beam LO.

In this embodiment, the semi-reflective films M1 through Mn-1 are rectangular in shape, and are formed stepwise so that the films gradually increase in size by a small amount g. However, the semi-reflective films M1 through Mn-1 could also be formed as circular films having the same diameter, and which are at least larger than the beam diameter of the light beam LO. This small distance g is 1/2 of the small distance h shown in Figure 1.

As is shown in Figure 3, the second optical beam splitter 9 is installed so that it is inclined by a relatively large angle β (e. g., 45°) with respect to the plane perpendicular to the eight incident light beams. Furthermore, one surface of the light-transmitting material 9a of the optical beam splitter 9 is partially coated in a band form with a totally reflective film 9b, and the optical beam splitter 9 is arranged so that the eight light beams split by the optical beam splitter 8 respectively enter the optical beam splitter 9 at points below the totally reflective film 9b.

Furthermore, another surface of the light-transmitting material 9a is partially coated in a band form in an area parallel to the surface coated with the totally reflective film 9b with a semi-reflective film 9c which has a reflectivity of 50%. This semi-reflective film 9c with a reflectivity of 50% transmits half of the quantity of the light of each of the eight light beams which enter the light-transmitting material 9a at points below the totally reflective film 9b and travel through the interior of the material 9a. Furthermore, the film 9c reflects the remaining half of the quantity of the light of each of the light beams toward the totally reflective film 9b. The light beams which travel toward the totally reflective film 9b through the interior of the light-transmitting material 9a are reflected by said totally reflective film 9b and pass through the points above the semi-reflective film 9c with a reflectivity of 50% on the opposite surface.

Thus, in the optical beam splitter 9, eight light beams are caused to enter the beam splitter at points below the totally reflective film 9b, and each of these light beams is split into two light beams, each of which having 50% of the quantity of light of the original light beam. Eight of these split light beams are emitted from the semi-reflective film 9c with a reflectivity of 50%, and the remaining eight split light beams are emitted at points above the semi-reflective film 9c with a reflectivity of 50%.

As is shown in Figure 1, the optical beam splitter 9 is installed so that it is inclined at a small angle γ with respect to the direction in which the eight incident light beams are lined up in a row. As a result, because of internal reflection, the positions at which the eight light beams in the upper row i. e., the light beams which are emitted at points above the aforementioned semi-reflective film 9c are emitted from the optical beam splitter 9 are shifted more greatly in a lateral direction than the positions at which the eight light beams in the lower row i. e., the light beams which are emitted from the semi-reflective film 9c are emitted from the optical beam splitter 9. Furthermore, the angle γ is finely adjusted so that the positions at which the eight light beams in the upper row are emitted from the optical beam splitter 9 are laterally shifted by one-half pitch with respect to the positions at which the eight light beams in the lower row are emitted from the optical beam splitter 9.

The sixteen light beams with equal quantities of light produced by the optical beam splitter 9 enter two eight-channel ultrasonic modulators 10 and 11 which are provided one on top of the other, with a spacing of e. g. 1.0 mm between the modulators. The eight light beams in the upper row emitted from the optical beam splitter 9 enter the upper modulator 10, while the eight light light beams in the lower row emitted from the optical beam splitter 9 enter the lower modulator 11. Acoustic electrodes 10a through 10h which generate ultrasonic waves for the purpose of independent modulation of the respective light beams are installed on the upper surface of the upper modulator 10. Furthermore, acoustic electrodes 11a through 11h which generate ultrasonic waves for the purpose of independent modulation of the respective light beams are installed on the lower surface of the lower modulator 11. These acoustic electrodes 10a through 10h and 11a through 11h are installed on side surfaces which run perpendicular to the light beams passing through the modulators, so that the electrodes are positioned perpendicular to the respective light beams. These electrodes independently modulate the respective light beams on the basis of image signals. The relative relationship of the beam diameter of the light beams, the size of the acoustic electrodes and the spacing of the electrodes is, for example, as follows: Beam diameter = 0.8 mm, size of acoustic electrodes = 1.0 mm, and electrode spacing = 1.5 mm.

The eight light beams which pass through the upper modulator 10 and the eight light beams which pass through the lower modulator 11 are shifted in phase with respect to the gravure platemaking roll 1 which constitutes the recording material. Accordingly, when the gravure platemaking roll 1 is caused to rotate in the direction indicated by the arrow, modulation signals which apply the required delay processing are sent to the acoustic electrodes 11a through 11h of the lower modulator 11. As is shown in Figure 5, the gravure platemaking roll 1 is first exposed in eight spaced dots 13a through 13h lined up in a row, which are created by the eight light beams modulated and controlled by the upper modulator 10. Next, when the gravure platemaking roll 1 has rotated in a very short time by an amount corresponding to the aforementioned phase shift, the gravure platemaking roll 1 is exposed in eight spaced dots 14a through 14h lined up in a row, which are created by the eight light beams modulated and controlled by the lower modulator 11. Accordingly, these dots 14a through 14h are shifted by one-half pitch with respect to the previously exposed dots 13a through 13h, so that a row of overlapping dots is formed. If modulating signals based on image signals are sent to the acoustic electrodes 10a through 10h and 11a through 11h, and the timing of the modulating signals sent to the acoustic electrodes 11a through 11h is delayed in accordance with the phase shift, a halftone image can be exposed on the gravure platemaking roll 1.

As was described above, the optical beam splitting method and optical beam splitting/modulation method of the inventions of the present application have the following merits:
(1) Since two optical beam splitters are used, a single light beam can be split into a multiple number of split light beams which are lined up in two rows so that there is no overlapping between adjacent light beams, and which are arranged so that the two rows are shifted by one-half pitch with respect to each other. Furthermore, since the split light beams are conducted into two stacked multi-channel ultrasonic modulators where the beams are modulated, and since one row is modulated with a delay, the respective split beams can be independently modulated without any crosstalk. Accordingly, image processing can be accomplished in a favorable manner.
(2) Since two multi-channel ultrasonic modulators are provided together, the multi-channel ultrasonic modulators and the associated crystal optical system can be maintained at approximately the same size as in a conventional system, while the number of split beams which can be modulated is approximately doubled compared to a conventional system. Accordingly, the size of the dots of the object of recording can be decreased, so that the image resolution is conspicuously improved. At the same time, the image output time can be cut approximately in half.
(3) Of the two rows of acoustic electrodes on the multi-channel ultrasonic modulators, a delay modulation is performed in the case of one row of electrodes, so that the two rows of light beams are converted into a single row which takes the form of a connected chain. Accordingly, there is no need to install mirrors or optical fibers between the multi-channel ultrasonic modulators and the crystal optical system. Thus, the apparatus is compact and simple, and assembly and adjustment of the apparatus are easy.

## Claims

1. An optical beam splitting method, in which:
a light beam (Lo) is caused to pass through a first optical beam splitter (8) in which a) a prescribed number n of transparent parallel plates (P1, P2, P3 ... Pn) having the same thickness to a high degree of precision are stacked together, b) the back surface of the transparent parallel plate (Pn) which is the farthest from the side at which said light beam enters is coated with a totally reflective film (Mn) while the back surfaces of all of the remaining transparent parallel plates (P1, P2, P3 ... Pn-1) are coated with different semi-reflective films (M1, M2; M3 ... Mn-2, Mn-1) whose respective reflectivities gradually increase from the front (M1) of the stack toward the back (Mn-1) in a numerical series 1/n, 1/(n-1), 1/(n-2), 1/(n-3), ... 1/4, 1/3, 1/2 in relation to the number n of said transparent parallel plates, and c) coating regions of said totally reflective film (Mn) and semi-reflective films (M1, M2, M3 ... Mn-1) are positioned in a stepwise oblique arrangement (g) which is struck by said light beam (Lo) travelling obliquely through the interiors of said transparent parallel plates (P1, ... Pn);
said light beam (Lo) is partially reflected by each of said semi-reflective films (M1, M2, M3 ... Mn-1) and completely reflected by said totally reflective film (Mn), so that said light beam is converted into a number n of split light beams (L1, ... Ln) which are of equal luminous intensity, and so that the respective split light beams are emitted parallel to each other in a row in the direction of the side of the stack from which said light beam (Lo) initially entered, without any of said split light beams striking the preceding semi-reflective films;
characterised in that:
said split light beams are next caused to be incident on a second optical beam splitter (9) in which a) one surface of a light-transmitting material (9a) is partially coated in band form with a totally reflective film (9b), while another parallel surface of said light-transmitting material (9a) is partially coated in band form with a semi-reflective film (9c) which has a reflectivity of 50%, and b) said surface which is coated with said totally reflective film (9b) is inclined by a prescribed amount with respect to the plane perpendicular to the incident split light beams split by the first optical beam splitter (β) and with respect to the direction in which the incident split light beams are lined up in a row (γ);
and in that a first series of split light beams (La) with approximately 50% of the intensity of the incident split light beams are split and emitted parallel to each other in a row from said semi-reflective film (9c) and a second series of split light beams (Lb) with the remaining 50% of the intensity of the incident light beams are internally reflected by said semi-reflective film (9c) and completely reflected by said totally reflective film (9b) of said second splitter, and are therefore again emitted parallel to each other in a row from the surface coated with said semi-reflective film (9c), but are emitted so that they miss said semi-reflective film (9c), and are furthermore emitted so that said second series of split light beams are separated by a prescribed distance from said first series of split light beams, and so that the individual split light beams in the first series are laterally shifted by approximately one-half pitch with respect to the individual split light beams in the second series.

2. A method of modulating light beams comprising the step of splitting a single light beam into a first and a second series of n light beams as claimed in claim 1, and further comprising the installation of two multi-channel ultrasonic modulators (10, 11) equipped with acoustic electrodes (10a - 10h; 11a - 11h) which are positioned perpendicular to the respective split light beams and which independently modulate said split light beams, said two ultrasonic modulators being installed adjacent to each other with said acoustic electrodes on the outside, said first series of split light beams with 50% intensity emitted from said semi-reflective film (9c) with a reflectivity of 50% being passed through one of said ultrasonic modulators (11), said second series of split light beams with 50% intensity emitted from said uncoated area being passed through the other multi-channel ultrasonic modulator (10), the split light beams in each of the series being individually and independently modulated on the basis of image signals, and the split light beams in one series being modulated with a delay applied with respect to the modulation of the other of said two series so that the two rows of modulated light beams are convertible into a single row which takes the form of a connected chain.

## Patentansprüche

1. Optisches Strahlteilungsverfahren, wobei:
ein Lichtstrahl (Lo) veranlaßt wird, durch einen ersten optischen Strahlteiler (8) zu gehen, in dem a) eine vorbestimmte Zahl n von transparenten parallelen Platten (P1, P2, P3 ... Pn), die gleiche Dicke mit hohem Präzisionsgrad haben, aneinandergestapelt ist, b) die Rückseite der transparenten parallelen Platte (Pn), die von der Seite, an der der Lichtstrahl eintritt, am weitesten entfernt ist, mit einer totalreflektierenden Schicht (Mn) beschichtet ist, wogegen die Rückseiten sämtlicher übrigen transparenten parallelen Platten (P1, P2, P3,... Pn-1) mit verschiedenen halbreflektierenden Schichten (M1, M2; M3 ... Mn-2, Mn-1) beschichtet sind, deren jeweiliges Reflexionsvermögen von der Vorderseite (M1) des Stapels zur Rückseite (Mn-1) allmählich in einer Zahlenreihe 1/n, 1/(n-1), 1/(n-2), 1/(n-3), ... 1/4, 1/3, 1/2 relativ zu der Zahl n der lichtdurchlässigen parallelen Platten zunimmt, und c) Beschichtungsbereiche der totalreflektierenden Schicht (Mn) und der halbreflektierenden Schichten (M1, M2, M3 ... Mn-1) in einer schrittweisen schrägen Anordnung (g) positioniert sind, auf die der Lichtstrahl (Lo) auftrifft, der schräg durch das Innere der transparenten parallelen Platten (P1, ... Pn) geht;
der Lichtstrahl (Lo) von jeder der halbreflektierenden Schichten (M1, M2, M3 ... Mn-1) teilreflektiert und von der totalreflektierenden Schicht (Mn) vollständig reflektiert wird, so daß der Lichtstrahl in eine Anzahl n von Teillichtstrahlen (L1, ... Ln) umgewandelt wird, die gleiche Lichtstärke haben, und so daß die jeweiligen Teillichtstrahlen parallel zueinander in einer Reihe in der Richtung der Seite des Stapels, von der der Lichtstrahl (Lo) ursprünglich eingetreten ist, emittiert werden, ohne daß irgendeiner der Teillichtstrahlen auf die vorhergehenden halbreflektierenden Schichten trifft;
dadurch gekennzeichnet, daß:
die Teillichtstrahlen dann veranlaßt werden, auf einen zweiten optischen Strahlteiler (9) aufzutreffen, wobei a) eine Oberfläche eines lichtdurchlässigen Materials (9a) in Bandform mit einer totalreflektierenden Schicht (9b) teilbeschichtet ist, während eine andere, parallele Oberfläche des lichtdurchlässigen Materials (9a) mit einer halbreflektierenden Schicht (9c) in Bandform teilbeschichtet ist, die ein Reflexionsvermögen von 50 % hat, und b) die Oberfläche, die mit der totalreflektierenden Schicht (9b) beschichtet ist, um einen vorgegebenen Betrag geneigt ist in bezug auf die Ebene, die zu den einfallenden Teillichtstrahlen senkrecht ist, die von dem ersten optischen Strahlteiler (β) geteilt werden, und in bezug auf die Richtung, in der die einfallenden Teillichtstrahlen in einer Reihe ausgerichtet sind (γ);
und daß eine erste Serie von Teillichtstrahlen (La) mit ungefähr 50 % der Intensität der einfallenden Teillichtstrahlen geteilt und parallel zueinander in einer Reihe von der halbreflektierenden Schicht (9c) emittiert werden und eine zweite Serie von Teillichtstrahlen (Lb) mit den restlichen 50 % der Intensität der einfallenden Lichtstrahlen von der halbreflektierenden Schicht (9c) innen reflektiert und von der totalreflektierendne Schicht (9b) des zweiten Strahlteilers vollständig reflektiert werden und daher wiederum parallel zueinander in einer Reihe von der Oberfläche, die mit der halbreflektierenden Schicht (9c) beschichtet ist, emittiert werden, jedoch so emittiert werden, daß sie die halbreflektierende Schicht (9c) verfehlen, und ferner so emittiert werden, daß die zweite Serie von Teillichtstrahlen um einen vorgegebenen Abstand von der ersten Serie von Teillichtstrahlen getrennt ist, und so daß die einzelnen Teillichtstrahlen der ersten Serie in bezug auf die einzelnen Teillichtstrahlen der zweiten Serie um ungefähr einen halben Abstand seitlich verschoben sind.

2. Verfahren zum Modulieren von Lichtstrahlen, das den Schritt des Teilens eines einzigen Lichtstrahls in eine erste und eine zweite Serie von n Lichtstrahlen gemäß Anspruch 1 aufweist und das weiter das Anbringen von zwei Multikanal-Ultraschallwandlern (10, 11) aufweist, die mit akustischen Elektroden (10a-10h; 11a-11h) ausgestattet sind, die senkrecht zu den jeweiligen Teillichtstrahlen positioniert sind und die die Teillichtstrahlen unabhängig modulieren, wobei die zwei Ultraschallmodulatoren einander benachbart mit den akustischen Elektroden an der Außenseite angebracht sind, die erste Serie von Teillichtstrahlen mit 50 % Intensität, die von der halbreflektierenden Schicht (9c) mit einem Reflexionsvermögen von 50 % emittiert werden, durch einen (11) der Ultraschallmodulatoren geleitet wird, die zweite Serie von Teillichtstrahlen mit 50 % Intensität, die von dem unbeschichteten Bereich emittiert werden, durch den anderen Multikanal-Ultraschallmodulator (10) geleitet wird, wobei die Teillichtstrahlen in jeder der Serien einzeln und unabhängig auf der Basis von Bildsignalen moduliert werden und die Teillichtstrahlen in der einen Serie unter Anwendung einer Verzögerung in bezug auf die Modulation der anderen der beiden Serien moduliert werden, so daß die beiden Reihen von modulierten Lichtstrahlen in eine einzige Reihe, die die Form einer verbundenen Kette annimmt, konvertierbar sind.

## Revendications

1. Procédé optique de fractionnement de faisceaux, dans lequel :
un faisceau lumineux (Lo) est amené à passer à travers un premier système de fractionnement de faisceaux (8) dans lequel a) un nombre n prescrit de plaques transparentes parallèles (P1, P2, P3... Pn) ayant la même épaisseur avec une grande précision sont empilées, b) la surface postérieure de la plaque transparente parallèle (Pn) la plus éloignée du côté duquel ledit faisceau lumineux entre est revêtue d'un film (Mn) totalement réfléchissant alors que les surfaces postérieures de toutes les autres plaques transparentes parallèles (P1, P2, P3... Pn-1) sont revêtues de films semi-réfléchissants différents (M1, M2, M3... Mn-1) dont les pouvoirs réfléchissants respectifs augmentent progressivement de l'avant (M1) de la pile de l'arrière (Mn-1) dans une série numérique 1/n, 1/(n-1), 1/(n-2), 1/(n-3)... 1/4, 1/3, 1/2 en relation avec le nombre n desdites plaques transparentes parallèles et c) les zones revêtues dudit film totalement réfléchissant (Mn) et desdits films semi-réfléchissants (M1,M2, M3... Mn-1) sont placées dans une disposition en gradins oblique (g) qui est atteinte par ledit faisceau lumineux (Lo) passant obliquement à travers l'intérieur desdites plaques transparentes parallèles (P1,... Pn) ;
ledit faisceau lumineux (Lo) est partiellement réfléchi par chacun desdits films semi-réfléchissants (M1, M2, M3... Mn-1) et complètement réfléchi par ledit film totalement réfléchissant (Mn), de sorte que ledit faisceau lumineux est converti en un nombre n de faisceaux lumineux fractionnés (L1,... Ln) qui sont d'intensité lumineuse égale, et de sorte que les différents faisceaux lumineux fractionnés sont émis parallèlement les uns aux autres en rangée en direction du côté de la pile par lequel ledit faisceau (Lo) est initialement entré, sans que l'un desdits faisceaux lumineux fractionnés ne touche les films semi-réfléchissants précédents ;
caractérisé en ce que :
lesdits faisceaux lumineux fractionnés sont ensuite amenés en incidence sur un second système de fractionnement de faisceaux (9) dans lequel a) une surface d'un matériau transmettant la lumière (9a) est partiellement revêtue sous forme de bandes d'un film totalement réfléchissant (9b), alors qu'une autre surface parallèle dudit matériau transmettant la lumière (9a) est partiellement revêtue sous forme de bandes d'un film semi-réfléchissant (9c) qui a un pouvoir réfléchissant de 50 %, et b) ladite surface revêtue dudit film semi-réfléchissant (9b) est inclinée d'une valeur prescrite par rapport au plan perpendiculaire aux faisceaux lumineux fractionnés incidents fractionnés par le premier système optique de fractionnement de faisceaux ( β ) et par rapport au sens dans lequel les faisceaux lumineux fractionnés incidents sont alignés en rangée ( γ ) ;
et en ce qui concerne les faisceaux lumineux fractionnés d'une première série (La) ayant approximativement 50 % de l'intensité des faisceaux lumineux fractionnés incidents sont fractionnés et émis parallèlement les uns les autres en rangée à partir dudit film semi-réfléchissant (9c) et les faisceaux lumineux fractionnés d'une seconde série (Lb) ayant les 50 % restants de l'intensité desdits faisceaux lumineux fractionnés incidents sont réfléchis de façon interne par ledit film semi-réfléchissant (9c) et complètement réfléchis par ledit film totalement réfléchissant (9b) dudit second système de fractionnement de faisceaux, et sont donc émis encore parallèlement les uns aux autres en rangée à partir de la surface revêtue dudit film semi-réfléchissant (9c), mais sont émis de façon à manquer ledit film semi-réfléchissant (9c), et sont en outre émis de telle sorte que ladite seconde série de faisceaux lumineux fractionnés soit séparée d'une distance prescrite de ladite première série de faisceaux lumineux fractionnés, et de telle sorte que les différents faisceaux lumineux fractionnés de la première série soient décalés latéralement d'approximativement la moitié du niveau par rapport aux différents faisceaux lumineux fractionnés de la seconde série.

2. Procédé de modulation de faisceaux lumineux comportant l'étape de fractionnement d'un seul faisceau lumineux en une première et une seconde série de n faisceaux lumineux selon la revendication 1, et comportant l'installation de deux modulateurs à ultra-sons (10, 11) multi-canaux équipés d'électrodes acoustiques (10a - 10h ; 11a - 11h) qui sont placées perpendiculairement aux différents faisceaux lumineux fractionnés et qui modulent indépendamment lesdits faisceaux lumineux fractionnés, lesdits modulateurs à ultra-sons étant installés au voisinage l'un de l'autre avec lesdites électrodes acoustiques à l'extérieur, ladite première série de faisceaux lumineux fractionnés ayant 50 % de l'intensité émise à partir dudit film semi-réfléchissant (9c) ayant un pouvoir réfléchissant de 50 % étant passée à travers l'un desdits modulateurs à ultra-sons (11), ladite seconde série de faisceaux lumineux fractionnés ayant 50 % de l'intensité émise à partir de ladite zone non revêtue étant passée à travers l'autre modulateur à ultra-sons multi-canaux (10), les faisceaux lumineux fractionnés de chacune des séries étant modulés individuellement et indépendamment sur la base de signaux d'image, et les faisceaux lumineux fractionnés d'une série étant modulés avec un délai appliqué par rapport à la modulation de l'autre desdites deux séries de telle sorte que les deux rangées de faisceaux lumineux modulés soient convertibles en une seule rangée qui prend la forme d'un chaîne connectée.
